(19)

Europäisches
Patentamt
European
Patent Office
Office européen
des brevets

(11) **EP 2 960 848 A1**

(12) **EUROPEAN PATENT APPLICATION**

(43) Date of publication:
**30.12.2015 Bulletin 2015/53**

(51) Int Cl.:
***G06Q 30/02*** *(2012.01)*

(21) Application number: **15173965.3**

(22) Date of filing: **26.06.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **27.06.2014 JP 2014133135**

(71) Applicant: **Toshiba TEC Kabushiki Kaisha Tokyo 141-0032 (JP)**

(72) Inventor: **KAWAMOTO, Tsuyoshi Shinagawa-ku, Tokyo 141-0032 (JP)**

(74) Representative: **Takeuchi, Maya et al Fédit-Loriot 38, avenue Hoche 75008 Paris (FR)**

(54) **DEMAND PREDICTION APPARATUS AND DEMAND PREDICTION METHOD BY THE SAME**

(57)     A demand prediction apparatus comprises a storage module for storing, as an actual result data, a purchase quantity of each commodity purchased in the past and variation factor information obtained by digitizing a variation factor which varies the purchase quantity; a reception module for receiving input of a reference date on which a demand prediction is initiated; a regression coefficient calculation module for calculating, based on the actual result data, a regression coefficient indicating a degree of contribution of the variation factor information which affects a variation of the purchase quantity; and a prediction purchase quantity calculation module for calculating a purchase quantity for each commodity to be purchased on the reference date, using the regression coefficient calculated and the variation factor information on the reference date, wherein the variation factor includes information of elapsed days from the start of bargain sale within the bargain sale period.

FIG.1

EP 2 960 848 A1

## Description

FIELD

Embodiments described herein relate generally to a demand prediction apparatus and a demand prediction method by the demand prediction apparatus.

BACKGROUND

Conventionally, a POS (Point of Sales) system has become popularized and purchase (sales) data for each commodity can be collected easily. Then, a demand prediction for each commodity in a store based on the purchase data for each commodity has come into use.

For example, a demand prediction obtained by analyzing the purchase data can be used to reduce an occurrence of disposal-loss of commodities left unsold caused by excessively large order in quantity, or to reduce an occurrence of chance-loss due to the commodity shortage caused by excessively small order in quantity. Then, a technology has been proposed in which the demand prediction is combined with computerization of transactions between companies through the EDI (Electronic Data Interchange) to develop into an automated order system.

As a method of a demand prediction that can be used in the automated order system, there is a well-known multi-regression analysis. By using such a multi-regression analysis, a demand prediction can be carried out for each commodity.

Incidentally, there is a commodity (hereinafter referred to as a bargain commodity) provided at a low price for attracting customers on a planed or scheduled date and time among the commodities to be sold in the store. Even for the same commodity, there is a big difference in the number of sales quantity between a regular price commodity and a bargain commodity.

However, in a conventional demand prediction with the multi-regression analysis, though the prediction is carried out using the purchase data in the past, the prediction accuracy of demand prediction of the bargain commodity is likely to be low because the number of sales quantity of the bargain commodity is not kept constant through a year.

BRIEF DESCRIPTION OF THE DRAWINGS

Fig. 1 is a block diagram illustrating the constitution of a system including a demand prediction apparatus according to an embodiment;
Fig. 2 is a block diagram illustrating the hardware constitution of a computer serving as the main body of the demand prediction apparatus;
Fig. 3 is a diagram illustrating a latest actual result and a previous year's actual result;
Fig. 4 is a diagram schematically illustrating the multi-regression analysis; and
Fig. 5 is a flowchart illustrating a procedure of a processing relating to a demand prediction in the system.

DETAILED DESCRIPTION

In accordance with an embodiment, a demand prediction apparatus comprises a storage module configured to store, as an actual result data, a purchase quantity of each commodity purchased in the past and variation factor information obtained by digitizing a variation factor which varies the purchase quantity; a reception module configured to receive an input of a reference date on which a demand prediction is initiated; a regression coefficient calculation module configured to calculate, based on the actual result data stored in the storage module, a regression coefficient indicating a degree of contribution of the variation factor information which affects a variation of the purchase quantity; and a prediction purchase quantity calculation module configured to calculate a purchase quantity for each commodity to be purchased on the reference date as a prediction purchase quantity, using the regression coefficient calculated by the regression coefficient calculation module and the variation factor information on the reference date, wherein the variation factor stored in the storage module includes information of elapsed days from the start of the bargain sale within the bargain sale period.

Preferably, the variation factor stored in the storage module contains a first day of the bargain sale as elapsed days information from the start of the bargain sale within the bargain sale period.

Alternatively, the variation factor stored in the storage module contains a first day and second day of the bargain sale as elapsed days information from the start of the bargain sale within the bargain sale period.

Preferably, the actual result data stored in the storage module is a first actual result data of a predetermined period nearest to the reference date and a second actual result data of a predetermined period from a date, before a previous year, corresponding to the reference date in a future direction; and the regression coefficient calculation module calculates the regression coefficient, based on each average value of purchase quantity in a divided period obtained by dividing a period relating to the second actual result data into a given number of parts, for a commodity of which a difference of the purchase quantities in between the first actual result data and the second actual result data is greater than a given value.

Preferably, the regression coefficient calculation module is capable of randomly setting the given number of parts of the period relating to the second actual result data.

The present invention further relates to a demand prediction method. The method includes: storing, as an actual result data, a purchase quantity of each commodity purchased in the past and variation factor information obtained by digitizing a variation factor which varies the purchase quantity; receiving an input of a reference date on which a demand prediction is initiated; calculating, based on the actual result data, a regression coefficient indicating a degree of contribution of the variation factor information which affects a variation of the purchase quantity; and calculating a purchase quantity for each commodity to be purchased on the reference date as a prediction purchase quantity, using the regression coefficient calculated and the variation factor information on the reference date. Preferably, the variation factor includes information of elapsed days from the start of the bargain sale within the bargain sale period.

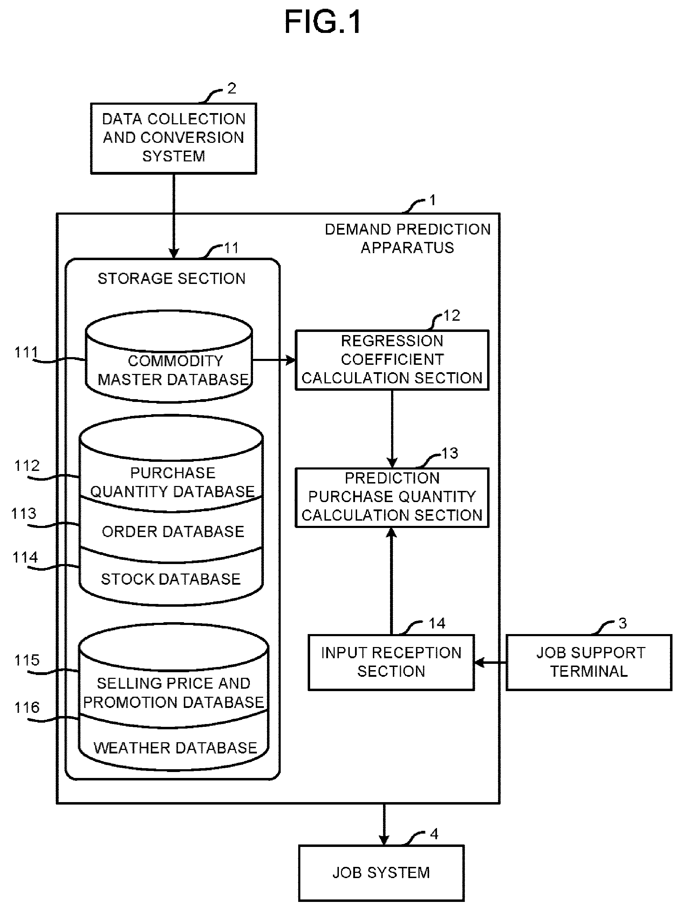

Fig. 1 is a block diagram illustrating the constitution of a system including a demand prediction apparatus according to the embodiment. As shown in Fig. 1, a system of a retailer comprises a demand prediction apparatus 1 arranged in the headquarters of retail stores, a data collection and conversion system 2, a job support terminal 3 and a job system 4.

The demand prediction apparatus 1 simulates a purchase situation of a commodity by customers in a sales state such as a selling price (sales price), display or promotion of a commodity at the sales side in the store in a retail business.

The demand prediction apparatus 1 builds a purchasing model of customers which is divided into a regression coefficient of the purchase quantity of parts considered not to vary with time and a variation factor serving as a part varying faster than the regression coefficient, using the actual result data representing the purchase conditions and past sales conditions.

In addition, the demand prediction apparatus 1 applies a sales condition and a purchase environment on a reference date on which a demand prediction is initiated to the variation factor of the built purchasing model to predict a purchase quantity of each commodity at that time.

The data collection and conversion system 2 collects past information such as purchase data, order data, stock data, selling price and promotion data, weather data and the like of a plurality of commodities in the store from the present time to a past given time as an actual result data. Then, the data collection and conversion system 2 converts the collected actual result data into a predetermined data format and transmits converted data to various kinds of databases of the demand prediction apparatus 1.

The data collection and conversion system 2 includes various data collection systems such as a well-known POS system, an order system, an inspection system of commodities delivered, a reception system of weather data, an input system of local events, and a data conversion system.

The job support terminal 3 serving as a user interface of the demand prediction apparatus 1 inputs data for controlling the simulation of purchase conditions. For example, a user inputs a sales state and a purchase environment at the reference date serving as the demand prediction target through the job support terminal 3.

Further, in a case in which a prediction purchase quantity in a sales state and a purchase environment that are initially set is not a value of a goal of the user of the demand prediction apparatus 1, the user inputs control data to the demand prediction apparatus 1 through the job support terminal 3 to perform a re-prediction process by varying a planned selling price and the like.

The job system 4 is various kinds of systems using a prediction purchase data and the like calculated by the demand prediction apparatus 1, and includes an order system, a processing instruction system, a price display system, a selling price registration system and the like.

For example, the processing instructing system as one of the job system 4 processes the prediction purchase data into a suggested order data according to a predetermined order unit and an order lead-time to send it to a well-known order system as other one of the job system 4.

In the order system, an order data for each commodity is sent to a predetermined fresh processing center, wholesaler, producer and the like by a given date and time.

Each of the demand prediction apparatus 1, various systems 2 and 4, and the job support terminal 3 comprises a general computer system and a portable device having same functions as those of the general computer system, and the functions are realized by executing a computer program corresponding to each system.

Further, the large-scale data used by the demand prediction apparatus 1, various systems 2 and 4, and the job support terminal 3 is constructed as a database in a storage device of the general computer system through a general database-software.

Further, the constitutions of the demand prediction apparatus 1 and the peripheral systems thereof shown in Fig. 1 can be applied to a retail business including one store or a plurality of stores.

Further, the demand prediction apparatus 1 of the present embodiment may provide a service (application) in the form of a cloud-computing service (e.g. an SaaS (Software as a Service)).

Herein, a computer constituting the main body of the demand prediction apparatus 1 is described.

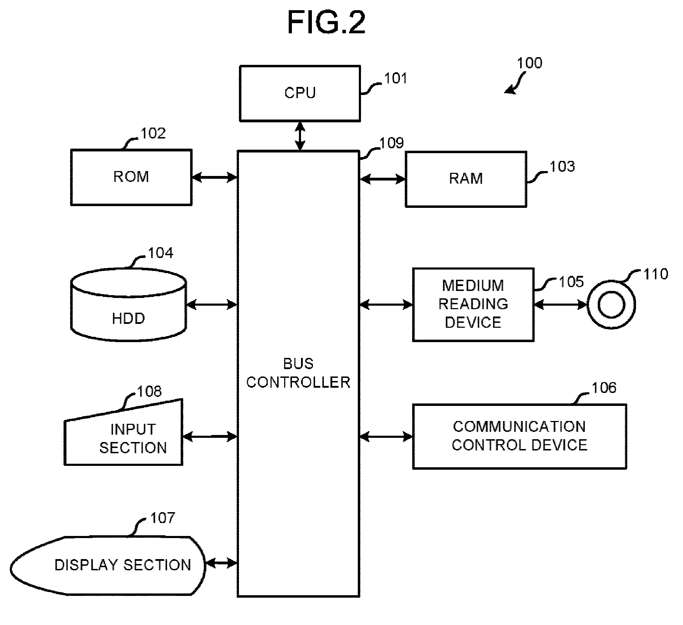

Fig. 2 is a block diagram illustrating the hardware constitution of a computer 100 serving as the main body of the demand prediction apparatus 1. As shown in Fig. 2, the computer 100 comprises a CPU (Central Processing Unit) 101 which carries out information processing, a ROM (Read Only Memory) 102 which stores BIOS and the like and a RAM (Random Access Memory) 103 which stores various data in a rewritable manner.

The computer 100 further comprises an HDD (Hard Disk Drive) 104 which functions as a various databases and serves as a storage section for storing various programs, a medium reading device 105 such as a DVD driver for storing information, distributing information to external devices and obtaining information from the external devices using the storage medium 110, a communication control device 106 for transmitting information with other external devices via each communication line, a display section 107 such as an LCD (Liquid Crystal Display) on which progress of a processing and a result thereof are displayed to a user, and an input section 108 including a pointing device, e.g., a mouse, and a keyboard for inputting a command, information and the like to the CPU 101 by the user.

Further, in the computer 100, the data transmitted and received by each section described above is mediated by the bus controller 109.

In such a computer 100, when the user turns on power, the CPU 101 starts a program called as a loader in the ROM 102 to read a program called as an OS (Operating System) for managing the hardware and software of a computer from the HDD 104 to the RAM 103 and the OS is developed or expanded on the RAM to be started.

Such an OS starts programs, reads information and stores information according to the operation of the user through the CPU 101. Windows (registered trademark) is well known as a typical OS. A program which runs on the OS is referred to as an application program.

Further, the application program is not limited to a program which runs on a given OS, and may be a program which executes a later-described various processing a part of which is performed by the OS, or may be a program contained as a part of a group of program files constituting a given application software, an OS and the like.

In general, application programs installed in the HDD 104 of the computer 100 are firstly recorded in the storage medium 110 including various optical discs such as a CD-ROM, a DVD and the like, various magnetic optical disks, various magnetic disks such as flexible disk and the like, various types of media such as a semiconductor memory and the like, and then the programs recorded in the storage medium 110 are installed in the HDD 104. Thus, the removable storage medium 110 including the optical information recording media such as a CD-ROM, a DVD and the like, the magnetic media such as a FD and the like is also capable of storing the application programs. Further, the application programs may also be, for example, acquired from an external device through the communication control device 106 to be installed in the HDD 104.

When the application program which runs on the OS is started, the computer 100 executes various kinds of arithmetic processing through the CPU 101 according to the application program to collectively control each section.

Further, the application program executed by the computer 100 serving as the main body of the demand prediction apparatus 1 of the present embodiment is stored in a computer connected with a network such as the Internet and may be provided by downloading it through the network.Or, the application program may be provided or distributed through a network such as the Internet.

Furthermore, the application program which is installed in the ROM and the like in advance may be provided.

Hereinafter, a demand prediction processing which is a typical processing of the present embodiment among various arithmetic processing executed by the CPU 101 of the computer 100 according to the application program is described.

As shown in Fig. 1, the demand prediction apparatus 1 comprises a storage section 11 functioning as a storage module, a regression coefficient calculation section 12 functioning as a regression coefficient calculation module, a prediction purchase quantity calculation section 13 functioning as a prediction purchase quantity calculation module and an input reception section 14 serving as a reception module which are realized by the CPU 101 according to the application programs.

The storage section 11 includes a commodity master database 111, a purchase quantity database 112, an order database 113, a stock database 114, a selling price and promotion database 115, a weather database 116, and the like.

The storage section 11 manages information used by not only the demand prediction apparatus 1, but also other terminal or system.

The storage section 11 is not limited to be arranged inside the demand prediction apparatus 1, and may be arranged in an external device different from the demand prediction apparatus 1 as a database server.

The commodity master database 111 manages a commodity code, commodity name, commodity category of each commodity. As a commodity category, for example, a hierarchical commodity classification code such as a class code for classifying a commodity group consisting of a plurality of commodities as a class, a line code for classifying a class group consisting of a plurality of classes as a line, a dept. code for classifying a line group including a plurality of lines as a dept. (department) and the like can be listed.

The purchase quantity database 112 is a database for managing the purchase data. The purchase quantity database 112 manages a history of purchase quantity from the present time to a past given time for each commodity identified with the commodity code. Herein, as long as the time unit used for managing various data is predetermined according to the embodiment, the purchase quantity may be managed in one day unit, or in several hours unit.

The order database 113 is a database for managing the order data. The order database 113 manages a history of order quantity from the present time to a past given time for each commodity identified with the commodity code.

Further, the stock database 114 is a database for managing the stock data. The stock database 114 manages a history of stock number from the present time to a past given time for each commodity identified with the commodity code.

The storage section 11 is further provided with a database for storing information relating to a variation factor varying the purchase quantity of a commodity group. For example, the selling price and promotion database 115 stores a selling data and a promotion data, which are the variation factors, indicating promotion state. Specifically, the selling price and promotion database 115 manages, for commodities identified with commodity codes, a regular price indicating the price for general sales conditions, a bargain price indicating the actual sales price varying from the regular price due to bargain sale, a bargain sale period indicating the date and period of applying the bargain price, information indicating whether or not the commodities are carried on an advertising paper or a flyer, and the like, which are applied from the present time to a past given time.

Incidentally, as to the commodities provided at a low price (hereinafter referred to as a bargain sale commodity) on a specified date and time for gathering customers, it is evident from the analysis of the past actual result that the purchase quantities on the first day and the second day of a bargain sale are quite different from that of other days thereof. Specifically, the purchase quantity on the first day of the sale is sharply increased in comparison with the purchase quantity of commodities sold at the regular price, and the purchase quantity on the second day of the sale is slightly decreased compared to that on the first day of the sale. Moreover, after the third day of the sale, the purchase quantity is more than that of commodities sold at the regular price but less than the purchase quantities on the first day and the second day of the sale respectively, and becomes a constant quantity. Thus, in the present embodiment, elapsed days information from the beginning of the bargain sale, called as the first day and second day of the sale in the bargain sale period is also managed in the selling price and promotion database 115 as a variation factor. That is, a difference is given between bargain sale days in the bargain sale period.

Further, it is exemplified in the present embodiment that the first day and the second day are applied as the elapsed days information from the beginning of bargain sale in the bargain sale period. However, it is not limited to this, and it may set only the first day.

Further, the weather database 116 stores weather data such as temperature, humidity, weather, rainfall and the like from the present time to the past given time.

In this way, each database of the storage section 11 stores actual result data collected by the data collection and conversion system 2 to manage it.

The regression coefficient calculation section 12 calculates for each commodity, based on the actual result data stored in the storage section 11, a regression coefficient indicating a degree of contribution of each data, acting as a variation factor, which affects the variation of purchase quantity of the commodity.

Further, the regression coefficient calculation section 12 calculates, for each commodity, a purchase quantity regression coefficient indicating a degree of contribution of each purchase quantity of other commodities which affects a variation of purchase quantity of the commodity.

In the present embodiment, a case in which the commodities constituting a commodity group are N kinds of commodities is described. Moreover, it is assumed that the N kinds of commodities are represented as a commodity 1, a commodity 2 ...commodity n ... commodity N, respectively.

It is assumed that a purchase quantity of this commodity n (n=1, 2... N) is $Y_n$. Therefore, each purchase quantity of the commodity 1, commodity 2... commodity n... commodity N is respectively represented as a purchase quantity $Y_1$, $Y_2$... $Y_n$... $Y_N$. Moreover, each past purchase quantity is respectively represented as $Y\sim_1$, $Y\sim_2$... $Y\sim_n$... $Y\sim_N$.

Further, it is assumed that the data serving as a variation factor has M types. Then, the variation factor for a commodity n is respectively represented as $X_{n1}, X_{n2}...X_{nm}...X_{nM}$ (m=1, 2...M).

The variation factor $X_{nm}$ (t) is set to a sales price, day of the week, holiday, temperature, precipitation, selling-specific form, and elapsed days information (first day and second day of the sale) from the beginning of bargain sale in the bargain sale period, and is obtained by digitizing a data that possibly fluctuates the purchase quantity.

Herein, the selling-specific form may be, for example, a "regular" in which sales is carried out at a regular price, a "month sale" in which commodities are sold at a bargain price and the bargain sale period is over two weeks, a "bargain sale" other than the "month sale".

Then, in the regression coefficient calculation section 12, a purchase quantity $Y\sim_n$ of the commodity n in the past given period can be represented by the following formula (1).

$$Y\sim_n = a_{n1} Y\sim_1 + a_{n2} Y\sim_2 + \cdots + a_{n(n-1)} Y\sim_{n-1} + a_{n(n+1)} Y\sim_{n+1} + \cdots + a$$

$$_{nN} Y\sim_N + b_{n0} + b_{n1} X_{n1} + b_{n2} X_{n2} + \cdots + b_{nM} X_{nM} \quad \cdots \quad (1)$$

In formula (1) stated above, the $b_{n0}$ is set to a regression coefficient of the commodity n serving as a constant item. The $b_{n11}... b_{nM}$ are respectively set to a regression coefficient of each of data serving as M types of variation factors for the commodity n. The $a_{n1},..., a_{n(n-1)}, a_{n(n+1)} ,..., a_{nN}$ are respectively set to a purchase quantity regression coefficient indicating a degree of variation of the purchase quantity of the commodity n which is affected by the purchase quantity of other commodity.

Then, the regression coefficient calculation section 12 generates the formula (1) for each of N types of commodities and applies the past purchase quantity of each commodity in each of more than M+N number of times for given periods with the $Y\sim_1... Y\sim_N$ in formula (1) stated above to calculate all of the regression coefficients $b_{n0}, b_{n1}, ..., b_{nM}$ (n=1... N) and the purchase quantity regression coefficients $a_{n1}, ..., a_{nN}$ (n = 1 ...N) by using a well-known regression coefficient calculation method.

(Prediction target commodity group)

The regression coefficient calculation section 12 according to the present embodiment calculates the regression coefficients and the purchase quantity regression coefficients described above, using a well-known multiple regression analysis.

The regression coefficient calculation section 12 uses the actual result data stored in the storage section 11 to calculate these regression coefficients. In the present embodiment, the regression coefficient calculation section 12 uses a purchase quantity and an actual result data that can be taken as the variation factor within a predetermined period to calculate the regression coefficients and the purchase quantity regression coefficients.

Specifically, the regression coefficient calculation section 12 uses, based on a reference date on which a demand prediction is initiated, an actual result data of a past given period nearest to the reference date (hereinafter referred to as a nearest actual result) and an actual result data of a given period from a date of the previous year corresponding to the reference date in a future direction (hereinafter referred to as a previous year's actual result) to calculate the regression coefficients and the purchase quantity regression coefficients.

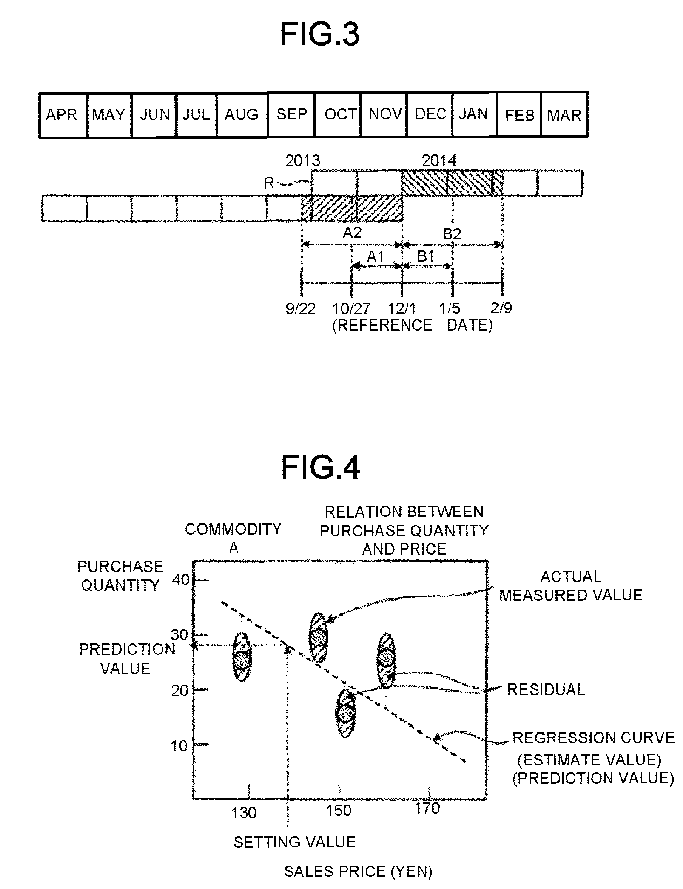

Herein, Fig. 3 is a diagram illustrating a nearest actual result and a previous year's actual result.

In the example shown in Fig. 3, it is assumed that the reference date serving as a demand prediction target date is set to a present time (present day), e.g., Dec 1st, 2014. An actual result data R of the past 35 days (from Oct 27th, 2014 to Nov 30th, 2014) nearest to the reference date is set to a first nearest actual result A1.

Further, an actual result data R of the past 70 days (from Sep 22nd, 2014 to Nov 30th, 2014) nearest to Dec 1st, 2014 is set to a second nearest actual result A2.

Further, an actual result data R of the past 35 days (from Dec 2nd, 2013 to Jan 5th, 2014) from a date of previous year corresponding to the reference date (Dec 2nd, 2013) in a future direction is set to a first previous year's actual result B1.

Furthermore, an actual result data R of the past 70 days (from Dec 2nd, 2013 to Feb 9th, 2014) from a date of previous year corresponding to the reference date (Dec 2nd, 2013) in a future direction is set to a second previous year's actual result B2.

In Fig. 3, a date of previous year corresponding to the reference date is set to a next day of the reference date. However, the present embodiment is not limited to this, and it may be the same day as the reference date. Further, the previous year's actual result is not limited to the actual result data of the previous year, and may use the actual result data of a year before the previous year.

Then, the regression coefficient calculation section 12 sorts, according to presence/absence of the actual result data and tendency of the actual result data relating to each commodity, the nearest actual result and the previous year's actual result into following three patterns to use them.

(Pattern P1)

As for (1) a commodity of which the previous year's actual results (a first previous year's actual result B1 and a second previous year's actual result B2) don't exist, and (2) a commodity of which a difference between the nearest actual result and the previous year's actual result is smaller than a first threshold value, the second nearest actual result A2 is used as a pattern P1. Herein, it is preferable that the first threshold value is set to a value indicating a small difference such as within 20% and the like. In this way, for example, a regular commodity and a commodity delivered every day and the like continuously purchased throughout a year regardless of seasons can be listed as the commodity of which the difference between the nearest actual result and the previous year's actual result is small.

(Pattern P2)

As for (1) a commodity of which the sales in the second nearest actual result A2 is smaller than a second threshold value, or (2) a commodity of which a difference between the nearest actual result and the previous year's actual result is greater than a third threshold value, the second previous year's actual result B2 is used as a pattern P2. Herein, it is preferable that the second threshold value is set to a value indicating that the number of sales is few, for example, less than 7 (0.1 per day) and the like.

Further, it is preferable that the third threshold value is set to a value indicating a big difference such as more than 80% and the like. In this way, for example, a commodity to be purchased in relation to a certain time and seasons (seasonal commodity) and a commodity provided at a cheaper price at a certain date (bargain sale commodity) can be listed as the commodity of which the difference between the nearest actual result and the previous year's actual result is big.

Incidentally, in the present embodiment, the regression coefficient calculation section 12 does not take the average of a purchase quantity of the seasonal commodity and a purchase quantity of the bargain sale commodity in a period of the second previous year's actual result B2 (for example, 70 days). The regression coefficient calculation section 12 calculates the regression coefficients and the purchase quantity regression coefficients, using each of the average values of purchase quantities in division periods obtained by dividing the period of the second previous year's actual result B2 into a given number (for example, two) of periods.

In this way, by further dividing the period of the second previous year's actual result B2 into a plurality of periods, it is possible to acquire a month in which there are many bargain sales, and a trend of the seasonal commodity, reasonably.

It is exemplified in the present embodiment that the period of the second previous year's actual result B2 is set to 70 days. However, it is not limited to this, and may be set to any days randomly.

In the present embodiment, the period of the second previous year's actual result B2 is set to 70 days. This is because that it is a proper length to include the factor of seasons.

In a case in which the consumption tax is changed, it may be set to a longer period of time (for example, three months).

In the present embodiment, the second previous year's actual result B2 is divided into two parts. However, it is not limited to this, and may be divided into more than three parts, randomly. For example, the period of the second previous year's actual result B2 may be divided into each month.

(Pattern P3)

As for (1) a predetermined commodity and a commodity that belongs to a predetermined commodity category, the first nearest actual result A1 and the first previous year's actual result B1 are used as a pattern P3. Further, as for a commodity that is not applicable to the conditions of the pattern P1 and the pattern P2 described above, the pattern P3 may also be used.

The period referred to in the pattern P3 is not limited to the 70 days in the first nearest actual result A1 and the first previous year's actual result B1, and may be a specified day or a specified period within the 70 days.

For example, a specified day or a specified period with the weather data close to the expected temperature and weather of the reference date in the first nearest actual result A1 and the first previous year's actual result B1 may be a reference target.

Further, for example, in a case in which a change of seasons can be detected according to a temperature difference of two periods by comparing an actual result data of nearest one week with an actual result data before the nearest one week, the actual result data of the nearest one week and the first previous year's actual result B1 may be used.

As for a commodity of which neither the previous year's actual result nor the nearest actual result exists, or a commodity of which the past actual result is quite few, the regression coefficient calculation section 12 calculates a regression coefficient, using an average value of all actual result data (nearest actual result and previous year's actual result data) of the commodity category the commodity belongs to or an actual result data (nearest actual result and previous year's actual result data) of a commodity similar to the commodity.

Further, the demand prediction may be carried out for each store, or a total demand prediction of all stores may be calculated. In a case of carrying out the demand prediction for each store, a commodity group to be a prediction target contains all commodities purchased in the past in a target store. However, a commodity which is not expected to be a sharp increase in the number of purchase quantity in the future and of which only few are purchased in one month may be excluded from the commodity group.

In this way, any of the patterns P1~P3 is selected according to a tendency of the purchase quantities in the nearest actual result and the previous year's actual result for each commodity to change a length of period of the nearest actual result and the previous year's actual result used in the calculation of the regression coefficient.

As stated above, it is preferred to set each pattern such that the sum of a length of period relating to the nearest actual result and the previous year's actual result is to be same days (70 days in the example shown in Fig. 3).

Then, in the present embodiment, the purchase quantity of the commodity n (=1, 2...N) in a past given period t used in the calculation of regression coefficient by the regression coefficient calculation section 12 is represented by the $Y_{\sim n}$ (t) (=$Y_{\sim 1}$ (t), $Y_{\sim 2}$ (t) ...$Y_{\sim n}$ (t) ...$Y_{\sim N}$ (t)). The given period t may be one day interval, one hour interval or one minute interval. Then, when calculating the regression coefficient, the total purchase quantity $Y_{\sim n}$ (t) purchased within such a given period t is read from the purchase quantity database 112.

(Variation factor)

In order to be used in the calculation of the regression coefficient by the regression coefficient calculation section 12, the data $X_{nm}$ (t) that can be taken as M (m=1, 2,···, M) types of past variation factors of the commodity n (=1, 2, ···, N) is read from each database in the storage section 11 for each given period t (t=1, 2, ···, T).

The regression coefficient calculation section 12 reads the data shown as follows from the storage section 11 as past data to be variation factors of the commodity n (= 1, 2 , ····, N).

$$X_{n1} （0），X_{n1} （1）, \cdots, X_{n1} （t）, \cdots, X_{n1} （T）$$

$$X_{n2} （0），X_{n2} （1）, \cdots, X_{n2} （t）, \cdots, X_{n2} （T）$$

... ....

$$X_{nM} （0），X_{nM} （1）, \cdots, X_{nM} （t）, \cdots, X_{nM} （T）$$

Herein, the total number T of given periods is required to be set to more than M+1 to solve this simultaneous equation. In other words, it is required to meet the relation of T≧M+1 (t=0,1,2...T) (m=1,2...M).

(Regression coefficient calculation)

Next, a regression coefficient calculation method is described.

First, as a well-known method for calculating a regression coefficient, in a case of using the past data $X_{nm}$ (t) to be a prediction factor, an estimated purchase quantity $Y_n$ (t) of the commodity n in the given period t (t=0, 1, ···, T) can be indicated by regression formulas (2-0)~ (2-T) shown as follows.

$$Y_n （0） = b_{n0} + b_{n1} X_{n1} （0） + b_{n2} X_{n2} （0） + \cdots + b_{nM} X_{nM} （0）$$

$$\cdots \quad (2\text{-}0)$$

$$Y_n （1） = b_{n0} + b_{n1} X_{n1} （1） + b_{n2} X_{n2} （1） + \cdots + b_{nM} X_{nM} （1）$$

$$\cdots \quad (2\text{-}1)$$

...

$$Y_n （t） = b_{n0} + b_{n1} X_{n1} （t） + b_{n2} X_{n2} （t） + \cdots + b_{nM} X_{nM} （t）$$

$$\cdots \quad (2\text{-}t)$$

...

$$Y_n(T) = b_{n0} + b_{n1}X_{n1}(T) + b_{n2}X_{n2}(T) + \cdots + b_{nM}X_{nM}(T)$$

At this time, in the multi-regression analysis, if an EO representing an expectation value is used, an error sum of squares Q can be indicated by a formula (3). Further, it is assumed that the $Y_{\sim n}$ (t) is set to the actual purchase quantity in the given period t.

$$Q = E(Y_n(t) - Y_{\sim n}(t))^2 \qquad \cdots (3)$$

Then, the constant item of the commodity n and M+1 (m = 0, 1, 2, ⋯⋯, M) regression coefficients $b_{nm}$ ($b_{nm} = b_{n0}, b_{n1}, b_{n2}, \ldots, b_{nm}, \ldots, b_{nM}$) to the variation factor $X_{nm}$ are derived in such a manner that the Q in formula (3) is minimized.

Fig. 4 is a diagram schematically illustrating the multi-regression analysis. A regression curve in Fig. 4 is obtained in such a manner that it is approximated to each actual measured value.

In the conventional method, the regression coefficient $b_{nm}$ of each of the regression formulas (2-0)~(2-T) is fixed and the prediction data $X_{nM}$ to be a variation factor in a period, i.e.,a prediction target, is substituted to the regression formulas (2-0)~(2-T), in this way, a prediction value $Y_n$ of a future purchase quantity of the commodity n can be calculated according to a formula (4) shown as follows.

$$Y_n = b_{n0} + b_{n1}X_{n1} + b_{n2}X_{n2} + \cdots + b_{nM}X_{nM} \qquad \cdots (4)$$

Incidentally, in the multi-regression analysis described above, no influence of the interaction of other commodities is contained as shown in formula (4). However, in practice, the interaction of each commodity occurs.

As an increase-decrease pattern of the purchase quantities between two commodities A-B, there are four kinds of interactions shown as follows.

(1) The purchase quantity of the commodity B is increased in a case in which the purchase quantity of the commodity A is increased;

(2) The purchase quantity of the commodity B is decreased in a case in which the purchase quantity of the commodity A is increased;

(3) The purchase quantity of the commodity B is increased in a case in which the purchase quantity of the commodity A is decreased; and

(4) The purchase quantity of the commodity B is decreased in a case in which the purchase quantity of the commodity A is decreased.

In addition, as long as these four kinds of interactions can be described for all commodities in the prediction target commodity group, no limitation is given to these four kinds of interactions.

Therefore, according to the present embodiment, in the regression formula for calculating a purchase quantity of the commodity A, all purchase quantities of commodities other than the commodity A in the same period are indicated as variation factors of the purchase quantity of the commodity A.

Thus, in the present embodiment, as to the commodity n, $Y_1, Y_2, \cdots, Y_{n-1}, Y_{n+1}, \cdots, Y_N$ corresponding to the past purchase quantities $Y_{\sim 1}$ (t), $Y_{\sim 2}$ (t), $\cdots$, $Y_{\sim n-1}$ (t), $Y_{\sim n+1}$ (t), $\cdots$, $Y_{\sim N}$ (t) of the commodities in the commodity group other than the commodity n are used as a purchase quantity variation factors of the commodity n in the regression formula.

Then, N-1 purchase quantity regression coefficients respectively corresponding to the purchase quantity variation factors $Y_1, Y_2, Y_{n-1}, Y_{n+1}, \cdots, Y_N$ of the commodity n are defined as $a_{n1}, a_{n2}, \cdot, a_{n(n-1)}, a_{n(n+1)}, \cdots, a_{nN}$, respectively.

Then, a formula (5) using all variation factors, all purchase quantity variation factors and those regression coefficients can be set as a regression formula for calculating the purchase quantity $Y_n$ of the commodity n.

$$Y_n = a_{n1}Y_1 + a_{n2}Y_2 + \cdots + a_{n(n-1)}Y_{n-1} + a_{n(n+1)}Y_{n+1} + \ldots + a_{nN}Y_N +$$
$$b_{n0} + b_{n1}X_{n1} + b_{n2}X_{n2} + \cdots + b_{nM}X_{nM} \qquad \cdots (5)$$

The total number of regression coefficients in formula (5) meets the following condition: (N-1) + (M+1) = N+M. Therefore, it is assumed that the number of the set of past data of the variation factors and the purchase quantity variation factors that are extracted from the storage section 11 is set to more than N+M.

That is, as for $Y_{\sim1}(t)$ $Y_{\sim2}(t), \cdots, Y_{\sim n-1}(t), Y_{\sim n+1}(t) \cdots, Y_{\sim N}(t)$ and $X_{n1}(t), X_{n2}(t), \cdots, X_{nM}(t)$ (t=0, 1,2,$\cdots$, T), it is needed to satisfy following condition: $T \geqq N + M-1$.

In a case in which the condition: $T \geqq N + M-1$ is satisfied, the regression coefficient calculation section 12 can calculate all of N+M purchase quantity regression coefficients $a_{n1}, a_{n2}, \cdots, a_{n(n-1)}, a_{n(n+1)} \cdots, a_{nN}$ of the commodity n and the regression coefficients $b_{n0}, b_{n1}, b_{n2}, \cdots, b_{nM}$, using the regression formula (5) and the well-known regression coefficient calculation method.

The prediction purchase quantity calculation section 13 calculates, for each commodity, a prediction purchase quantity representing a possible purchase quantity of a commodity to be purchased in a given period after the past given period described above, in other words, in a given period from now, based on the regression coefficients and the purchase quantity regression coefficient that are calculated by the regression coefficient calculation section 12 and a data to be the purchase quantity and the variation factor of each commodity stored in the storage section 11.

The prediction purchase quantity calculation section 13 uses a following formula (6) to calculate a prediction purchase quantity of the commodity n contained in N commodities of the commodity group.

$$b_{n0} + b_{n1}X_{n1} + b_{n2}X_{n2} + \cdots + b_{nM}X_{nM} = -a_{n1}Y_1 - a_{n2}Y_2 - \cdots - a_{n(n-1)}Y_{n-1} + Y_n - a_{n(n+1)}Y_{n+1} - \cdots - a_{nN}Y_N \qquad \cdots (6)$$

Then, the prediction purchase quantity calculation section 13 applies the data to be a variation factor of each commodity in a given period from now to $X_{n1}, \cdots, X_{nM}$ in formula (6) to generate the formula (6) for each of N types of commodities, and calculates the prediction purchase quantities $Y_1, Y_2, \cdots, Y_n, \cdots, Y_N$ for N commodities of the commodity group respectively based on the generated N equations.

(Purchase quantity estimation)

Before describing an estimate method of a future purchase quantity, an estimate method of the past purchase quantity is described.

If the variation factor, the purchase quantity, the variation factor, the regression coefficient and the purchase quantity regression coefficient and the like are used for each of N commodities of the commodity group, a regression formula group (7-1)~(7-N) can be set.

$$Y_1 = a_{12}Y_2 + a_{13}Y_3 + \cdots + a_{1N}Y_N + b_{10} + b_{11}X_{11} + b_{12}X_{12} + \cdots + b_{1M}X_{1M} \qquad \cdots \quad (7\text{-}1)$$

$$Y_2 = a_{21}Y_1 + a_{23}Y_3 + a_{24}Y_4 + \cdots + a_{2N}Y_N + b_{20} + b_{21}X_{21} + b_{22}X_{22} + \cdots + b_{2M}X_{2M} \qquad \cdots \quad (7\text{-}2)$$

...

$$Y_n = a_{n1}Y_1 + a_{n2}Y_2 + \cdots + a_{n(n-1)}Y_{n-1} + a_{n(n+1)}Y_{n+1} + \cdots + a_{nN}Y_N + b_{n0} + b_{n1}X_{n1} + b_{n2}X_{n2} + \cdots + b_{nM}X_{nM} \qquad \cdots \quad (7\text{-}n)$$

...

$$Y_N = a_{N1}Y_1 + a_{N2}Y_2 + \cdots + a_{N(N-2)}Y_{N-2} + a_{N(N-1)}Y_{N-1} + b_{n0} + b_{n1}X_{n1} + b_{n2}X_{n2} + \cdots + b_{nM}X_{nM} \qquad \cdots \quad (7\text{-}N)$$

Then, in the regression formula group (7-1)~(7-N), as long as the past each given period (t=0, 1, 2... T) meets the condition: $T \geq N+M-1$, the formulas (8-1)~(8-N) shown as follows can be derived because all items at the right side of the equations are known.

$$Y_1(t) = a_{12}Y{\sim}_2(t) + a_{13}Y{\sim}_3(t) + \cdots + a_{1N}Y{\sim}_N(t) + b_{10} + b_{11}X_{11}(t) + b_{12}X_{12}(t) + \cdots + b_{1M}X_{1M}(t) \qquad \cdots (8\text{-}1)$$

$$Y_2(t) = a_{21}Y{\sim}_1(t) + a_{23}Y{\sim}_3(t) + a_{24}Y{\sim}_4(t) + \cdots + a_{2N}Y{\sim}_N(t) + b_{20} + b_{21}X_{21}(t) + b_{22}X_{22}(t) + \cdots + b_{2M}X_{2M}(t) \quad \cdots (8\text{-}2)$$

...

$$Y_n(t) = a_{n1}Y{\sim}_1(t) + a_{n2}Y{\sim}_2(t) + \cdots + a_{n(n-1)}Y{\sim}_{n-1}(t) + a_{n(n+1)}Y{\sim}_{n+1}(t) + \cdots + a_{nN}Y{\sim}_N(t) + b_{n0} + b_{n1}X_{n1}(t) + b_{n2}X_{n2}(t) + \cdots + b_{nM}X_{nM}(t) \qquad \cdots \quad (8\text{-}n)$$

...

$$Y_N(t) = a_{N1}Y{\sim}_1(t) + a_{N2}Y{\sim}_2(t) + \cdots + a_{N(N-2)}Y{\sim}_{N-2}(t) + a_{N(N-1)}Y{\sim}_{N-1}(t) + b_{n0} + b_{n1}X_{n1}(t) + b_{n2}X_{n2}(t) + \cdots + b_{nM}X_{nM}(t)$$
$$\cdots \quad (8\text{-}N)$$

Then, the past purchase quantity estimate value $Y_n(t)$ can be calculated on condition that the error sum of squares Q in the multi-regression analysis is minimized.

Incidentally, in the calculation of a prediction purchase quantity of the commodity n in a future given period, all regression coefficients $a_{nk}(n{\neq}k)$ and $b_{nm}$ at the right side of the regression formula group (7-1)~(7-N) are determined, and thus the data $X_{nM}$ to be a variation factor in the future given period can be derived.

However, as for $Y_k(k{\neq}n)$ at the right side, $Y_k$ means a prediction value of the future purchase quantity of a commodity other than the commodity n and is unknown in the future time, and thus a future prediction purchase quantity of the commodity n cannot be calculated only in formula (6).

Thus, in order to carry out the calculation of a future prediction purchase quantity by the prediction purchase quantity calculation section 13 according to the present embodiment, the variation factor $X_{nm}$ and the items relating to the regression coefficients $b_{n0}, b_{n1}, b_{n2}, \cdots, b_{nm}, \cdots, b_{nM}$ are set to meet following expression: $B_n = b_{n0} + b_{n1}X_{n1} + b_{n2}X_{n2} + \cdots + b_{nM}X_{nM}$.

Then, by transforming the regression formula group (7-1)~(7-N) with the expression described above, a simultaneous purchase quantity prediction formula group (9-1)~(9-N) including simultaneous linear equations for N commodities of the commodity group can be established.

$$B_1 = Y_1 - a_{12}Y_2 - a_{13}Y_3 - \cdots - a_{1N}Y_N \qquad \cdots \quad (9\text{-}1)$$

$$B_2 = -a_{21}Y_1 - Y_2 - a_{23}Y_3 - a_{24}Y_4 \ldots - a_{2N}Y_N \qquad \cdots \quad (9\text{-}2)$$

...

$$B_n = -a_{n1}Y_1 - a_{n2}Y_2 - \cdots - a_{n(n-1)}Y_{n-1} + Y_n - a_{n(n+1)}Y_{n+1} - \cdots - a$$

$$a_{nN}Y_N \qquad\qquad \cdots \qquad (9\text{-}n)$$

...

$$B_N = -a_{N1}Y_1 - a_{N2}Y_2 - \ldots - a_{N(N-2)}Y_{N-2} - a_{N(N-1)}Y_{N-1} - Y_N$$

$$\cdots \qquad (9\text{-}N)$$

Herein, in the simultaneous purchase quantity prediction formula group (9-1)~(9-N), if it is set that $a_{nn}=1(n=1, 2, \cdots, N)$ and $B_n=-a_{n1}Y_1-a_{n2}Y_2-\cdots-a_{n(n-1)}Y_{n-1}+a_{nn}Y_n-a_{n(n+1)}Y_{n+1}-\cdots-a_{nN}Y_N$, the number of the unknown number $Y_n$ is N and the number of formulas in the simultaneous purchase quantity prediction formula group (9-1)~(9-N) is also N.

Thus, if a matrix consisting of coefficients $a_{ij}(i, j= 1,2,\cdots, N)$ is regular, the prediction purchase quantity calculation section 13 can calculate future prediction purchase quantities $Y_1, Y_2,\cdots, Y_n,\cdots, Y_N$ of N commodities of the commodity group, using a well-known solution of simultaneous linear equation.

Then, if it is set that a vector $b_T=(B_1, B_2,\cdots, B_n,\cdots, B_N)$, a vector $Y_T=(Y_1, Y_2,\cdots,Y_n,\cdots,Y_N)$ and a matrix $A= \{a_{ij}\}$ $(i,j = 1, 2,\cdots, N)$, since A y=b, an equation: $y=A^{-1} b \cdots$ (10) can be derived if transforming the simultaneous purchase quantity prediction formula group (9-1)~(9-N).

Then, after an inverse matrix $A^{-1}$, i.e., a coefficient matrix, is calculated, the prediction purchase quantity calculation section 13 can calculate a vector y indicating a future prediction purchase quantity when receiving a vector b.

The vector b is constituted by the variation factor $X_{nm}$ and the like, in other words, includes a sales price, day of the week, holiday, temperature, precipitation, selling-specific form, elapsed days information (first day and second day of sale) from the beginning of bargain sale in the bargain sale period.

Thus, the prediction purchase quantity calculation section 13 can calculate, for various conditions on the reference date on which a demand prediction is initiated, a purchase quantity prediction on the sales price on the reference date, a purchase quantity prediction on a temperature (prediction temperature) on the reference date and a purchase quantity prediction on the elapsed days information (first day and second day of sale) from the beginning of bargain sale in the bargain sale period by receiving an input of the vector b.

In this way, the demand prediction apparatus 1 according to the present embodiment can calculate an optimal sales price (bargain price) of a commodity at which the sales is maximum for any commodity, or an optimal sales price (bargain price) at which the sales of all commodities are maximum.The input reception section 14 receives an input from the job support terminal 3. For example, the input reception section 14 receives an input of data to be a variation factor including a sales state (planned selling price, etc.) on the reference date and a purchase environment (sales form, elapsed days information (first day and second day of sale) from the beginning of bargain sale in the bargain sale period and the like) from the job support terminal 3. Further, the input reception section 14 receives from the job support terminal 3 an input of control data which instructs a re-prediction by changing a variation factor such as the planned selling price.

Herein, by setting the vector b derived according to the variation factor, input of which is received, in the prediction purchase quantity calculation section 13, a calculation for the prediction purchase quantity based on the sales state and the purchase environment can be carried out.

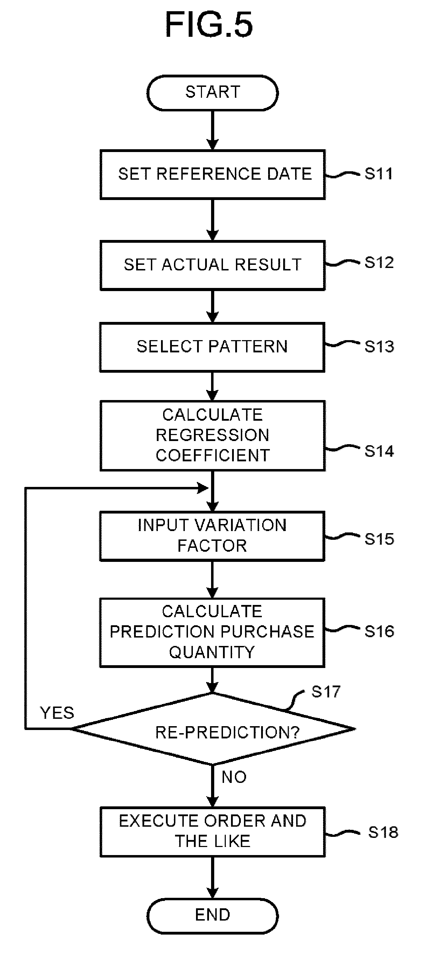

Next, a processing relating to a demand prediction in the system including the demand prediction apparatus 1 of the present embodiment is described. Fig. 5 is a flowchart illustrating the processing described above in the system according to the present embodiment.

First, the regression coefficient calculation section 12 of the demand prediction apparatus 1 sets a reference date on which a demand prediction is initiated (ACT S11).

Sequentially, the regression coefficient calculation section 12 further sets a range of actual result data (latest actual result and the previous year's actual result), which is referred, from the storage section 11 based on the reference date set in ACT S11 (ACT S12).

Herein, for example, the reference date may be set according to an instruction given through the job support terminal 3, or, after today's Job is ended, the next day, i.e. tomorrow, (mm, dd, yy) may be automatically set as a reference date.

Next, the regression coefficient calculation section 12 selects the nearest actual result and the previous year's actual result used in the calculation of the regression coefficient and the purchase quantity regression coefficient of each commodity from the patterns P1~P3 described above according to the presence/absence and tendency of actual result data (ACT S13).

Then, the regression coefficient calculation section 12 calculates a regression coefficient and a purchase quantity regression coefficient according to the nearest actual result and the previous year's actual result based on the selected pattern (ACT S14).

Further, as for a commodity of which neither the previous year's actual result nor the nearest actual result exists or a commodity of which the past actual result is quite few, the regression coefficient calculation section 12 calculates the regression coefficient and the purchase quantity regression coefficient, using an average value of all actual result data in a commodity category the commodity belongs to and an actual result data of a commodity similar to the commodity.

Sequentially, the input reception section 14 of the demand prediction apparatus 1 receives an input of a variation factor (data) on the reference date from the job support terminal 3 (ACT S15).

Further, though an input of the weather data on the reference date is not required because it is to be extracted from the storage section 11 as a weather forecast data, it may also be input through the job support terminal 3.

Further, in a case in which a variation factor on the reference date is stored in the storage section 11 in advance, the input reception section 14 may read the variation factor as a reception of the input.

The prediction purchase quantity calculation section 13 of the demand prediction apparatus 1 calculates a prediction purchase quantity of each commodity based on the variation factor the input of which is received and the calculated regression coefficient and purchase quantity regression coefficient (ACT S16). Further, not only the prediction purchase quantity of each commodity, but also a total sales and a total benefit may be calculated.

Next, the input reception section 14 of the demand prediction apparatus 1 determines whether or not a control data for instructing a re-prediction operation is input (ACT S17) from the job support terminal 3.

Herein, in a case in which an input of a control data for instructing a re-prediction operation in which it is carried out by varying the variation factor is received (YES in ACT S17) from the job support terminal 3, the processing in ACT S15 is carried out again to calculate a prediction purchase quantity again by changing the variation factor.

In ACT S17, in a case in which the control data for instructing the re-prediction operation is not input, but, an instruction data for allowing a prediction result is input instead (NO in ACT S17), the job system 4 carries out an order of a commodity based on the prediction purchase data (prediction purchase quantity) calculated by the demand prediction apparatus 1, the currently planned selling price and the like (ACT S18), and then terminates the processing.

It is exemplified in the present processing that the calculation of the prediction purchase quantity is stopped in response to an instruction of the user. However, it is not limited to this. For example, reference values of a prediction purchase quantity, a sales amount and the like are predetermined, and in a case in which each prediction result meets the corresponding reference value, an order processing may be carried out without waiting for the instruction from the user.

As stated above, in accordance with the demand prediction apparatus 1 according to the present embodiment, the regression coefficient calculation section 12 calculates a purchase quantity of each commodity to be purchased on the reference date as a prediction purchase quantity for a bargain-sale commodity, using the variation factor including the elapsed days information (for example, the first day and second day of the sale) from the beginning of the bargain sale n the bargain sale period on a reference date to be a demand prediction target. In this way, since the prediction accuracy on demand prediction relating to the bargain-sale commodity can be improved, a demand prediction can be carried out with high accuracy for each commodity.

Furthermore, in accordance with the demand prediction apparatus 1 according to the present embodiment, as for the seasonal commodities and bargain-sale commodities, the regression coefficient calculation section 12 calculates a regression coefficient based on each average value of the purchase quantities in divided periods obtained by dividing a given period from a date before the previous year corresponding to the reference date to be a demand prediction target in the future direction into a given number of parts, and calculates a purchase quantity of each commodity to be purchased on the reference date as a prediction purchase quantity, using the calculated regression coefficient and various variation factors on the reference date.

In this way, a month in which there are many bargain sales and a trend of the seasonal commodity can be acquired moderately, and the prediction accuracy on demand prediction relating to the seasonal commodity and bargain-sale commodity can be improved, and thus a demand prediction can be carried out with high accuracy for each commodity.

While certain embodiments have been described, these embodiments have been presented by way of example only, and are not intended to limit the scope of the invention. Indeed, the novel embodiments described herein may be embodied in a variety of other forms; furthermore, various omissions, substitutions and changes in the form of the embodiments described herein may be made without departing from the spirit of the invention. The accompanying claims and their equivalents are intended to cover such forms or modifications as would fall within the scope and spirit of the invention.

## Claims

1. A demand prediction apparatus, comprising:

a storage module configured to store, as an actual result data, a purchase quantity of each commodity purchased in the past and variation factor information obtained by digitizing a variation factor which varies the purchase quantity;

a reception module configured to receive an input of a reference date on which a demand prediction is initiated;

a regression coefficient calculation module configured to calculate, based on the actual result data stored in the storage module, a regression coefficient indicating a degree of contribution of the variation factor information which affects a variation of the purchase quantity; and

a prediction purchase quantity calculation module configured to calculate a purchase quantity for each commodity to be purchased on the reference date as a prediction purchase quantity, using the regression coefficient calculated by the regression coefficient calculation module and the variation factor information on the reference date, wherein

the variation factor stored in the storage module includes information of elapsed days from the start of the bargain sale within the bargain sale period.

2. The demand prediction apparatus according to claim 1, wherein the variation factor stored in the storage module contains a first day of the bargain sale as elapsed days information from the start of the bargain sale within the bargain sale period.

3. The demand prediction apparatus according to claim 1, wherein the variation factor stored in the storage module contains a first day and second day of the bargain sale as elapsed days information from the start of the bargain sale within the bargain sale period.

4. The demand prediction apparatus according to any one of claims 1 to 3, wherein

the actual result data stored in the storage module is a first actual result data of a predetermined period nearest to the reference date and a second actual result data of a predetermined period from a date, before a previous year, corresponding to the reference date in a future direction; and

the regression coefficient calculation module calculates the regression coefficient, based on each average value of purchase quantity in a divided period obtained by dividing a period relating to the second actual result data into a given number of parts, for a commodity of which a difference of the purchase quantities in between the first actual result data and the second actual result data is greater than a given value.

5. The demand prediction apparatus according to claim 4, wherein the regression coefficient calculation module is capable of randomly setting the given number of parts of the period relating to the second actual result data.

6. A demand prediction method, including:

storing, as an actual result data, a purchase quantity of each commodity purchased in the past and variation factor information obtained by digitizing a variation factor which varies the purchase quantity;

receiving an input of a reference date on which a demand prediction is initiated;

calculating, based on the actual result data, a regression coefficient indicating a degree of contribution of the variation factor information which affects a variation of the purchase quantity; and

calculating a purchase quantity for each commodity to be purchased on the reference date as a prediction purchase quantity, using the regression coefficient calculated and the variation factor information on the reference date, wherein

the variation factor includes information of elapsed days from the start of the bargain sale within the bargain sale period.

# FIG.1

DATA COLLECTION AND CONVERSION SYSTEM — 2

DEMAND PREDICTION APPARATUS — 1

STORAGE SECTION — 11

111 — COMMODITY MASTER DATABASE

112 — PURCHASE QUANTITY DATABASE

113 — ORDER DATABASE

114 — STOCK DATABASE

115 — SELLING PRICE AND PROMOTION DATABASE

116 — WEATHER DATABASE

12 — REGRESSION COEFFICIENT CALCULATION SECTION

13 — PREDICTION PURCHASE QUANTITY CALCULATION SECTION

14 — INPUT RECEPTION SECTION

3 — JOB SUPPORT TERMINAL

4 — JOB SYSTEM

# FIG.2

# FIG.3

| APR | MAY | JUN | JUL | AUG | SEP | OCT | NOV | DEC | JAN | FEB | MAR |
|-----|-----|-----|-----|-----|-----|-----|-----|-----|-----|-----|-----|

2013                    2014

R

A2          B2

A1    B1

9/22    10/27    12/1    1/5    2/9
(REFERENCE  DATE)

# FIG.4

COMMODITY
A

RELATION BETWEEN
PURCHASE QUANTITY
AND PRICE

PURCHASE
QUANTITY    40

ACTUAL
MEASURED VALUE

30

PREDICTION
VALUE

20

RESIDUAL

10

REGRESSION CURVE
(ESTIMATE VALUE)
(PREDICTION VALUE)

130        150        170

SETTING VALUE

SALES PRICE (YEN)

17

# FIG.5

```
                    ┌──────────────┐
                    │    START     │
                    └──────────────┘
                            │
                            ▼
          ┌─────────────────────────────────┐
          │      SET REFERENCE DATE          │ ── S11
          └─────────────────────────────────┘
                            │
                            ▼
          ┌─────────────────────────────────┐
          │       SET ACTUAL RESULT          │ ── S12
          └─────────────────────────────────┘
                            │
                            ▼
          ┌─────────────────────────────────┐
          │        SELECT PATTERN            │ ── S13
          └─────────────────────────────────┘
                            │
                            ▼
          ┌─────────────────────────────────┐
          │         CALCULATE                │
          │         REGRESSION               │ ── S14
          │         COEFFICIENT              │
          └─────────────────────────────────┘
                            │
                            ▼
          ┌─────────────────────────────────┐
          │      INPUT VARIATION             │ ── S15
          │          FACTOR                  │
          └─────────────────────────────────┘
                            │
                            ▼
          ┌─────────────────────────────────┐
          │         CALCULATE                │
          │   PREDICTION PURCHASE            │ ── S16
          │         QUANTITY                 │
          └─────────────────────────────────┘
                            │
                            ▼
                         S17
          YES    ╱─────────────────────╲
          ◄──────  RE-PREDICTION?       
                  ╲─────────────────────╱
                            │ NO
                            ▼
          ┌─────────────────────────────────┐
          │     EXECUTE ORDER AND            │ ── S18
          │        THE LIKE                  │
          └─────────────────────────────────┘
                            │
                            ▼
                    ┌──────────────┐
                    │     END      │
                    └──────────────┘
```

Europäisches
Patentamt

European
Patent Office

Office européen
des brevets

# EUROPEAN SEARCH REPORT

**Application Number**

EP 15 17 3965

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2012 150671 A (TOSHIBA TEC KK) 9 August 2012 (2012-08-09) * abstract; figure 1 * ----- | 1-6 | INV. G06Q30/02 |
| X | US 2012/303416 A1 (GARMON RONNIE J [US] ET AL) 29 November 2012 (2012-11-29) * abstract; figure 1 * ----- | 1-6 | |

| | |
|---|---|
| | TECHNICAL FIELDS SEARCHED (IPC) |
| | G06Q |

The present search report has been drawn up for all claims

| Place of search | Date of completion of the search | Examiner |
|---|---|---|
| Munich | 27 October 2015 | Kemény, Michael |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

..............................................................................

& : member of the same patent family, corresponding document

EPO FORM 1503 03.82 (P04C01)

**ANNEX TO THE EUROPEAN SEARCH REPORT
ON EUROPEAN PATENT APPLICATION NO.**
EP 15 17 3965

This annex lists the patent family members relating to the patent documents cited in the above-mentioned European search report.
The members are as contained in the European Patent Office EDP file on
The European Patent Office is in no way liable for these particulars which are merely given for the purpose of information.

27-10-2015

| Patent document cited in search report | Publication date | Patent family member(s) | Publication date |
|---|---|---|---|
| JP 2012150671 A | 09-08-2012 | JP 5337174 B2<br>JP 2012150671 A | 06-11-2013<br>09-08-2012 |
| US 2012303416 A1 | 29-11-2012 | NONE | |

EPO FORM P0459

For more details about this annex : see Official Journal of the European Patent Office, No. 12/82